# EUROPÄISCHE PATENTSCHRIFT

(11) **EP 2 013 458 B1**
(45) Veröffentlichungstag und Bekanntmachung des Hinweises auf die Patenterteilung: **18.04.2012**
(21) Anmeldenummer: 07724718.7
(22) Anmeldetag: 28.04.2007
(51) Int. Cl.: F02B 23/06

(54) **VERFAHREN ZUM BETRIEB EINER BRENNKRAFTMASCHINE UND BRENNKRAFTMASCHINE FÜR EIN SOLCHES VERFAHREN**
METHOD FOR OPERATING AN INTERNAL COMBUSTION ENGINE AND INTERNAL COMBUSTION ENGINE FOR SUCH A METHOD
PROCEDE POUR FAIRE FONCTIONNER UN MOTEUR A COMBUSTION ET UN MOTEUR A COMBUSTION POUR UN TEL PROCEDE

(30) Priorität: 04.05.2006 DE 102006020642
(43) Veröffentlichungstag der Anmeldung: 14.01.2009
(73) Patentinhaber: Daimler AG, 70327 Stuttgart (DE)
(72) Erfinder: ZÖLLER, Herbert, 70186 Stuttgart (DE)
(74) Vertreter: JENSEN & SON
(86) Internationale Anmeldenummer: PCT/EP2007/003791
(87) Internationale Veröffentlichungsnummer: WO 2007/128446

(56) Entgegenhaltungen:
- EP-A- 1 630 380
- EP-A1- 0 528 166
- DE-A1- 19 649 052
- DE-C- 976 061
- JP-A- 4 228 821
- JP-A- 4 272 447
- JP-A- 8 296 442
- JP-A- 9 228 838
- JP-A- 59 079 033
- JP-A- 2003 278 547
- JP-A- 2004 190 573
- US-A1- 2005 115 537

## Beschreibung

Die Erfindung betrifft Verfahren zum Betrieb einer direkteinspritzenden, selbstzündenden Brennkraftmaschine mit den Merkmalen nach dem Oberbegriff des Anspruchs 1 sowie eine Brennkraftmaschine, die zum Betrieb nach dem erfindungsgemäßen Verfahren vorgesehen ist.

Aus der DE 196 49 052 A1 ist ein Dieselmotor mit Direkteinspritzung und mit einer Kolbenmulde bekannt. Die dort gezeigte direkteinspritzende, selbstzündende Brennkraftmaschine umfaßt mindestens einen Zylinder, einen im Zylinder auf und ab geführten Kolben, einen Zylinderkopf und einen durch den Zylinder, den Kolben und den Zylinderkopf begrenzten Brennraum. In einen Kolbenboden des Kolbens ist eine Kolbenmulde eingeformt, die im Übergangsbereich zum Kolbenboden in einen im wesentlichen ringförmigen Stufenraum übergeht. Ein im Zylinderkopf angeordneter Injektor für Kraftstoff mündet in den Brennraum. Mittels des Injektors werden über dessen Umfang verteilt mehrere Einspritzstrahlen von Kraftstoff entlang kegelförmig angeordneter Strahlachsen in den Brennraum eingespritzt.

Der Einspritzstrahl trifft auf den Randbereich der Kolbenmulde. Als Folge davon wird der Strahl im wesentlichen in zwei Richtungen abgelenkt. Eine erste Teilmenge gelangt bezüglich der Axialrichtung des Zylinders nach unten in die Brennraummulde. Eine zweite Teilmenge breitet sich im wesentlichen in radialer Richtung über den Kolbenboden in Richtung der Zylinderwand aus. Durch beide Teilmengen wird je eine, also insgesamt zwei Verbrennungsfronten gebildet. Die zweite, sich in Richtung der Zylinderwand ausbreitende Teilmenge von Kraftstoff ist insbesondere hinsichtlich der Ruß- und Stickoxidbildung nicht optimal. Es ist ein erhöhter Rußeintrag ins Motoröl zu beobachten.

Weitere gattungsgemäße Brennräume von direkteinspritzenden Brennkraftmaschinen können der JP 04 272 447 A, der EP 1 630 380 A1, der JP 2004 190 573 A oder der US 2005 / 011 55 37 A1 entnommen werden.

Der Erfindung liegt die Aufgabe zugrunde, ein Verfahren zum Betrieb einer direkteinspritzenden, selbstzündenden Brennkraftmaschine mit verringerter Ruß- und Rauchentwicklung anzugeben.

Diese Aufgabe wird durch ein Verfahren mit den Merkmalen nach dem Anspruch 1 gelöst.

Des weiteren liegt der Erfindung die Aufgabe zugrunde, eine direkteinspritzende, selbstzündenden Brennkraftmaschine anzugeben, die für den Betrieb nach dem erfindungsgemäßen Verfahren geeignet ist.

Diese Aufgabe wird durch eine Brennkraftmaschine mit den Merkmalen des Anspruchs 4 gelöst.

Es wird vorgeschlagen, dass die Strahlachsen der von dem Injektor erzeugten Einspritzstrahlen zumindest in einem Teil des Zeitraums der Einspritzung auf den Stufenraum des Kolbens gerichtet sind. Die Einspritzstrahlen werden derart zum Stufenraum hin geführt und dort umgelenkt, dass eine erste Teilmenge von Kraftstoff in einer Axialrichtung und einer Radialrichtung in die Kolbenmulde umgelenkt wird. Eine zweite Teilmenge von Kraftstoff wird in der Axialrichtung und der Radialrichtung über den Kolbenboden in den Brennraum umgelenkt, während eine dritte Teilmenge von Kraftstoff in eine Umfangrichtung umgelenkt wird, wobei die jeweils dritten Teilmengen benachbarter Einspritzstrahlen in der Umfangsrichtung aufeinandertreffen und anschließend in der Radialrichtung nach innen umgelenkt werden.

Ausbildung und Führung der vorgenannten dritten Teilmengen werden durch das Auftreffen der Einspritzstrahlen auf den Stufenraum hervorgerufen. Infolge der Umlenkung in Richtung der Kolbenmuldenmitte wird eine neue, dritte Verbrennungsfront gebildet. Diese bildet sich zwischen den Einspritzstrahlen und somit genau dort aus, wo noch genügend Restsauerstoff zur Verbrennung zur Verfügung steht. Als Folge davon sinkt die Rußemission.

Da diese dritte Verbrennungsfront zu den beiden anderen Verbrennungsfronten erst zeitverzögert brennt, wird auch die lokale Spitzentemperatur im Brennraum und in der Folge davon die Stickoxidentstehung vermindert. Auch die Rußnachoxidation wird durch diesen Effekt begünstigt.

Sofern die Brennkraftmaschine zur Stickoxidreduktion mit zurückgeführtem Abgas betrieben wird, erhält man durch die zweimalige Umlenkung der Kraftstoffteilchen im Stufenraum - also eine erste Umlenkung in die Umfangsrichtung und anschließend eine zweite Umlenkung radial nach innen - einen zusätzlichen Durchmischungseffekt, der auch das zurückgeführte, nahezu inerte Abgas besser mit Sauerstoff und Kraftstoff durchmischt. Die Entstehung lokaler Temperaturspitzen ist vermindert, womit auch die Stickoxidemission abnimmt.

Für eine wirkungsvolle Ausbildung der drei Verbrennungsfronten müssen der Strahlkegelwinkel, der Einspritzbeginn und die Einspritzdauer untereinander und auf den Kurbelwinkel der Brennkraftmaschine abgestimmt werden, dass zumindest ein beträchtlicher Anteil der Einspritzstrahlen von Kraftstoff auf den Stufenraum auftrifft. Diese Abstimmung wird bevorzugt derart getroffen, dass mindestens 30%, insbesondere einschließlich 30% bis einschließlich 80% der eingespritzten Kraftstoffmenge auf den Stufenraum trifft. Die Einspritzung des Kraftstoffes erfolgt zweckmäßig mit einem Druck > 1700 bar, bevorzugt > 2000 bar, und insbesondere mit etwa 2150 bar. Für eine wirkungsvolle Ausbildung der dritten Verbrennungsfront hat sich eine Abstimmung als zweckmäßig herausgestellt, bei der die jeweils dritten Teilmengen benachbarter Einspritzstrahlen in der Umfangsrichtung mit einer Geschwindigkeit von mindestens 15 m/s, insbesondere von 30 m/s aufeinandertreffen.

Für eine wirkungsvolle Ausbildung und Umlenkung der dritten Teilmengen ist eine Wand des Stufenraumes bevorzugt im Querschnitt konkav als Kreisbogenausschnitt oder als Ellipsenausschnitt mit einem Radius ausgebildet, der in einen Bereich von einschließlich 3% bis einschließlich 30% eines Radius der Kolbenmulde liegt.

Alternativ kann es auch zweckmäßig sein, dass die Wand des Stufenraumes im Querschnitt durch eine gerade Umfangswand, einen geraden Boden und eine konkav gekrümmte Übergangswand gebildet ist, wobei die Umfangswand gegenüber einer Axialrichtung in einem Bereich von einschließlich +10° bis einschließlich -30° geneigt ist, und/oder wobei der Boden gegenüber einer Radialrichtung in einem Bereich von einschließlich +30° bis einschließlich -40° geneigt ist und/oder wobei die konkav gekrümmte Übergangswand einen Radius in einem Bereich von einschließlich 1,5% bis einschließlich 20% des Radius der Kolbenmulde aufweist.

Eine Höhe des Stufenraumes in der Axialrichtung liegt bevorzugt in einem Bereich von einschließlich 10% bis einschließlich 30% des Radius der Kolbenmulde, wobei eine Breite des Stufenraumes in der Radialrichtung in einem Bereich von einschließlich 2% bis einschließlich 30% des Radius der Kolbenmulde liegt.

Für eine wirkungsvolle Umlenkung der jeweiligen dritten Teilmengen von Kraftstoff aus der Umfangsrichtung in die Radialrichtung sind vorteilhaft beidseitig eines Auftreffpunktes der Strahlachse auf den Stufenraum Umlenkmittel im Stufenraum angeordnet. Sie begünstigen eine aerodynamisch saubere, verlustarme Führung der jeweiligen dritten Teilmengen von Kraftstoff.

Die Umlenkmittel sind zweckmäßig als in der Radialrichtung und der Axialrichtung nach innen von der Wand des Stufenraumes aus und in Richtung der Kolbenmulde bzw. des Brennraumes hervorstehende Ablenknasen ausgebildet. Diese können im nahezu beliebigen geometrischen Formen in den Kolben eingeformt werden. Insbesondere bei einteiliger gußtechnischer Ausbildung kann ohne zusätzlichen fertigungstechnischen Aufwand eine strömungstechnisch günstig angepaßte Richtungsumlenkung verwirklicht werden.

Hierzu geht der Stufenraum in der Umfangsrichtung und der Radialrichtung bevorzugt kreisbogenförmig konkav in die Ablenknase über. Der kreisbogenförmige Übergang weist zweckmäßig einen Radius auf, der in einem Bereich von einschließlich 5% bis einschließlich 50% des Radius der Kolbenmulde liegt.

Alternativ kann es vorteilhaft sein, dass der Stufenraum in der Umfangsrichtung und der Radialrichtung elliptisch konkav in die Ablenknase übergeht. Hierbei weist der elliptische Übergang bevorzugt eine kleine Halbachse und eine große Halbachse auf, wobei die kleine Halbachse in einem Bereich von einschließlich 2% bis einschließlich 25% und die große Hablachse in einem Bereich von einschließlich 10% bis einschließlich 60% des Radius der Kolbenmulde liegt. Auch hierdurch wird eine strömungstechnisch günstige Umlenkung der dritten Kraftstoff-Teilmenge von der Umfangsrichtung radial nach innen erreicht.

Zur Unterstützung der Strömungsführung ist zweckmäßig vorgesehen, dass eine Höhe der Ablenknase in der Axialrichtung in einem Bereich von einschließlich 60% bis einschließlich 100% der Höhe des Stufenraumes liegt, dass eine Breite der Ablenknase in der Radialrichtung in einem Bereich von einschließlich 60 % bis einschließlich 100% der Breite des Stufenraumes liegt, und dass eine axiale Stirnfläche der Ablenknase um einen Winkel in einem Bereich von einschließlich 0° bis einschließlich 40° gegenüber der Radialrichtung nach innen in die Kolbenmulde hineingeneigt ist.

Für eine gleichmäßige Ausbildung der drei Verbrennungsfronten und eine gute Durchmischung weist der Injektor vorteilhaft über seinen Umfang insbesondere gleichmäßig verteilt 7 bis 12, bevorzugt 8 bis 10 Einspritzlöcher auf. Für die Ausbildung von präzise geformten Einspritzstrahlen und ein gleichmäßiges Auftreffen auf den Stufenraum weisen die jeweiligen Einspritzlöcher des Injektors eine Länge und einen Durchmesser auf, wobei das Verhältnis der Länge zum Durchmesser in einem Bereich von einschließlich 3,0 bis einschließlich 11,0 liegt. Alle Strahlachsen der Einspritzstrahlen sind dabei zweckmäßig auf einem einzigen, gemeinsamen Kegelmantel angeordnet.

Ein Ausführungsbeispiel der Erfindung ist im Folgenden anhand der Zeichnung näher beschrieben. Es zeigen:
- Fig. 1: in einer schematischen Längsschnittdarstellung den Zylinder einer erfindungsgemäßen Brennkraftmaschine mit einem Kolben, einem Zylinderkopf und einem Brennraum sowie mit Einzelheiten zur Ausbildung eines in Teilmengen aufgeteilten Einspritzstrahls;
- Fig. 2: eine Detailansicht des Kolbens nach Fig. 1 mit Einzelheiten zur geometrischen Ausbildung seines Stufenraumes mit einem kreisabschnittförmigen Querschnitt;
- Fig. 3: eine Variante des Stufenraumes mit einem abgewinkelten Querschnitt;
- Fig. 4: ausschnittsweise eine Draufsicht des Kolbens nach Fig. 1 mit eingeformten Ablenknasen;
- Fig. 5: eine Detailansicht des Kolbens nach Fig. 4 in dem dort entlang der Linie V-V angedeuteten Querschnitt mit Einzelheiten zur geometrischen Ausbildung des Stufenraumes und der Ablenknase;
- Fig. 6: eine Variante der Ablenknase nach den Fig. 4 und 5 mit elliptisch konkaver Rundung;
- Fig. 7: in einer ausschnittsweisen Draufsicht einen Kolben mit darauf abgebildetem Ausbreitungsverläufen von
- Fig. 8: Einspritzstrahlen nach dem Beginn der Einspritzung; die Anordnung nach Fig. 7 nach weiter fortgeschrittener Kraftstoffeinspritzung mit in Umfangsrichtung aufeinander getroffenen dritten Kraftstoff-Teilmengen;
- Fig. 9: ein weiteres Phasenbild der Kraftstoffausbreitung nach den Fig. 7 und 8 mit radial nach innen umgelenkten dritten Teilmengen von Kraftstoff;
- Fig. 10: eine perspektivische Ansicht der Kraftstoffverteilung nach Fig. 9 mit Einzelheiten zur Ausbildung von drei Verbrennungsfronten.

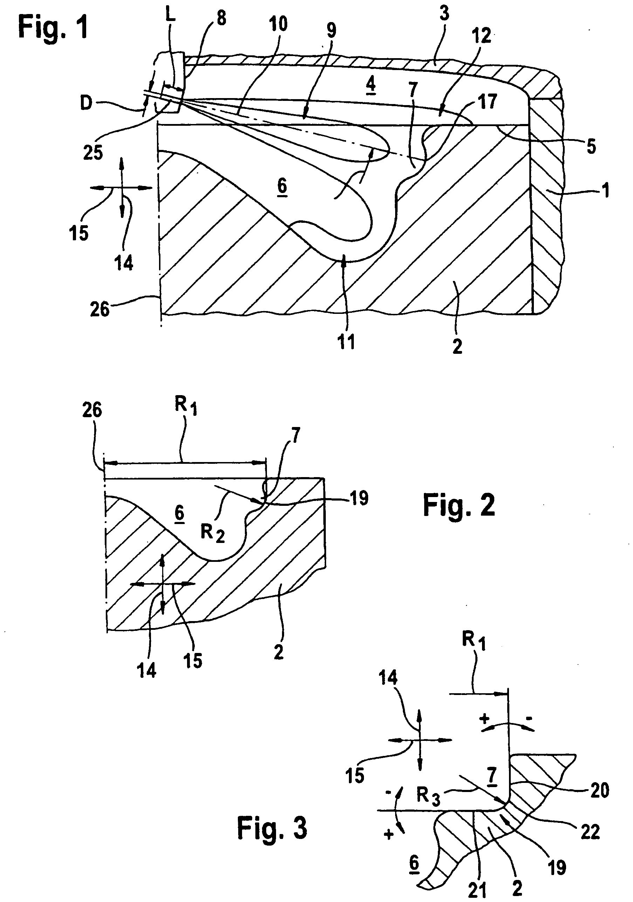

Fig. 1 zeigt in einer schematischen Längsschnittdarstellung eine erfindungsgemäß ausgeführte direkteinspritzende, selbstzündende Brennkraftmaschine im Bereich eines Zylinders 1, in dem ein Kolben 2 auf und ab geführt ist. Es ist beispielhaft nur ein Zylinder 1 gezeigt. Die Brennkraftmaschine kann eine beliebige Anzahl von entsprechend ausgestalteten Zylindern 1 aufweisen, in denen jeweils das nachfolgend beschriebene, erfindungsgemäße Verfahren ausgeführt wird.

Ein angedeuteter Zylinderkopf 3 begrenzt zusammen mit dem Zylinder 1 und dem Kolben 2 einen Brennraum 4. Im Zylinderkopf 3 ist ein angedeuteter Injektor zum Einspritzen von flüssigem Kraftstoff, insbesondere Dieselkraftstoff, angeordnet.

Der Kolben 2 weist auf seiner dem Brennraum 4 zugewandten Seite einen Kolbenboden 5 auf, in den eine Kolbenmulde 6 eingeformt ist. Die Kolbenmulde 6 geht bezogen auf eine Radialrichtung 15 außen im Übergangsbereich zum Kolbenboden 5 in einen im wesentlichen ringförmigen Stufenraum 7 über. Die gezeigte Anordnung ist insgesamt rotationssymmetrisch zu einer Zylinderachse 26 aufgebaut, wobei die Zylinderachse 26 eine Axialrichtung 14 vorgibt. Senkrecht zur Axialrichtung 14 liegt die Radialrichtung 15.

Der Injektor weist über seinen Umfang gleichmäßig verteilt Einspritzlöcher 25 auf, von denen der besseren Übersichtlichkeit halber hier nur ein Einspritzloch 25 dargestellt ist. Die Einspritzlöcher 25 des Injektors 8 weisen eine Länge L und einen Durchmesser D auf, wobei das Verhältnis der Länge L zum Durchmesser D in einem Bereich von einschließlich 3,0 bis 11,0 liegt. Eine Mittelachse der Einspritzlöcher 25 ist gegenüber der Radialrichtung 15 schräg nach unten zum Kolben 2 geneigt. Beim Einspritzen von Kraftstoff durch die Einspritzlöcher 25 entsteht jeweils ein schematisch angedeuteter Einspritzstrahl 9, deren Strahlachsen 10 kegelförmig angeordnet sind. Es kann zweckmäßig sein, für die verschiedenen Strahlachsen 10 unterschiedliche Kegelwinkel α vorzusehen. Im gezeigten Ausführungsbeispiel liegen alle Strahlachsen 10 der Einspritzstrahlen 9 auf einem einzigen gemeinsamen Kegelmantel mit einem konstanten Kegelwinkel α.

Abhängig vom Kurbelwinkel nimmt der Kolben 2 in der Axialrichtung 14 verschiedene Positionen relativ zum Zylinderkopf 3 bzw. zum Injektor 8 und dessen Strahlachsen 10 ein. Der Kegelwinkel α der kegelförmig angeordneten Strahlachsen 10, Einspritzbeginn und Einspritzdauer sind derart aufeinander bzw. auf den Kurbelwinkel und damit auf die axiale Position des Kolbens 2 abgestimmt, dass die Strahlachsen 10 zumindest über einen bedeutsamen Teil des Zeitraums der Einspritzung auf den Stufenraum 7 gerichtet sind. Dort treffen sie in einem Auftreffpunkt 17 auf den Stufenraum 7. Die vorgenannte Abstimmung ist derart gewählt, dass mindestens 30%, insbesondere einschließlich 30% bis einschließlich 80% der eingespritzten Kraftstoffmenge der Einspritzstrahlen 9 auf den Stufenraum 7 auftrifft.

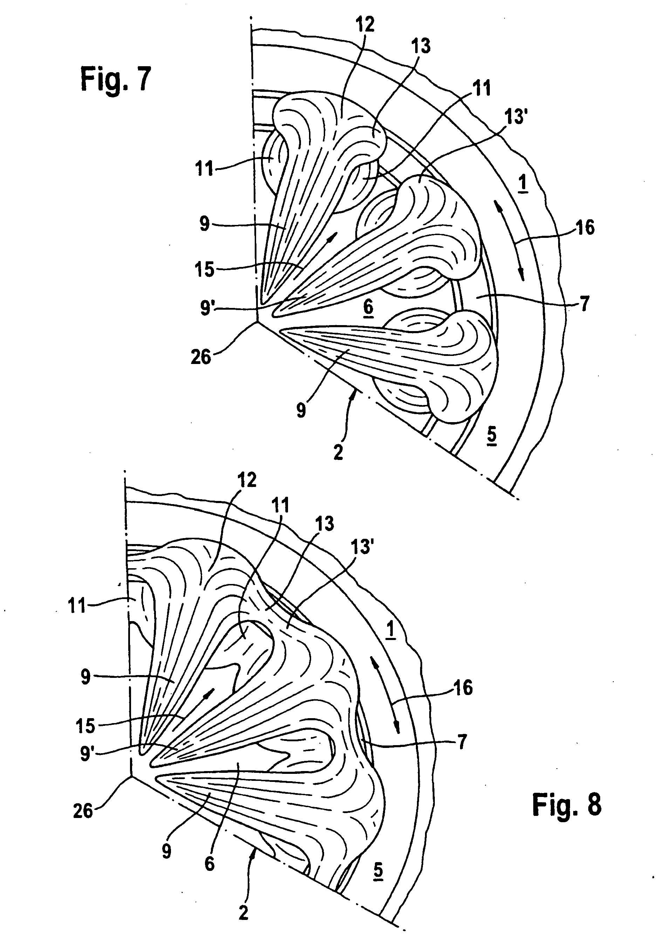

Die weiter unten näher beschriebene Ausbildung des Stufenraumes in Verbindung mit der vorgenannten Abstimmung bewirkt eine Aufteilung und Umlenkung der Einspritzstrahlen 9 in erste Teilmengen 11, zweite Teilmengen 12 und dritte, in den Fig. 7 bis 10 gezeigte Teilmengen 13. Die erste Teilmenge 11 von Kraftstoff wird in der Axialrichtung 14 und der Radialrichtung 15 vom Zylinderkopf 3 weg nach unten in die Kolbenmulde 6 und dort in der Radialrichtung 15 nach innen in Richtung zur Zylinderachse 26 umgelenkt. Die zweite Teilmenge 12 von Kraftstoff wird teilweise in der Radialrichtung 15 nach außen über den Kolbenboden 5 sowie zum anderen Teil aus dem Stufenraum 7 heraus in der Axialrichtung 14 nach oben zum Zylinderkopf 3 sowie in der Radialrichtung 15 nach außen über den Kolbenboden 5 in den Brennraum 4 hinein in Richtung der Wand des Zylinders 1 umgelenkt. Weitere Einzelheiten zur Kraftstofführung sind weiter unten im Zusammenhang mit den Fig. 7 bis 10 näher beschrieben.

Fig. 2 zeigt eine Detailansicht des Kolbens 2 nach Fig. 1 im Bereich der Kolbenmulde 6 und des Stufenraums 7. Der Stufenraum 7 ist in der Radialrichtung 15 nach außen und in der Axialrichtung 14 nach unten vom Kolbenboden 5 fortweisend durch eine gerundete Wand 19 begrenzt. Die Wand 19 des Stufenraums 7 ist im Querschnitt konkav als Kreisbogenausschnitt ausgeführt. Ein Radius R₂ des Kreisbogenausschnitts liegt im Bereich von einschließlich 3% bis einschließlich 30% eines Radius R₁ der Kolbenmulde 6. Der Radius R₁ der Kolbenmulde 6 ist von der Zylinderachse 26 aus gemessen und umfaßt die gesamte Kolbenmulde 6 einschließlich des Stufenraums 7.

Im gezeigten Ausführungsbeispiel ist ein konstanter Radius R₂ vorgesehen. Es kann auch eine elliptische Ausführung zweckmäßig sein, deren große und kleine Radien zweckmäßig in dem zuvor angegebenen Bereich liegen.

Fig. 3 zeigt eine alternative Ausführungsform des Stufenraums 7 nach Fig. 2. Demnach ist der Querschnitt des Stufenraums 7 winklig ausgeführt. Die Wand 19 des Stufenraumes 7 ist durch eine in der Axialrichtung 14 gerade, zylindrische Umfangswand 20, durch einen in der Radialrichtung 15 geraden, ebenen Boden 21 sowie durch eine konkav gekrümmte Übergangswand 22 gebildet. Der Boden 21 geht mittels der Übergangswand 22 in die Umfangswand 20 über. Die konkav gekrümmte Übergangswand 22 weist einen Radius R₃ auf, der in einem Bereich von einschließlich 1,5% bis einschließlich 20% des Radius R₁ der Kolbenmulde 6 liegt.

Die Umfangswand 20 liegt im gezeigten Ausführungsbeispiel parallel zur Axialrichtung 14, während der Boden 21 parallel zur Radialrichtung 15 liegt. Mit + und - versehene Doppelpfeile deuten an, dass es auch zweckmäßig sein kann, für die Umfangswand 20 und/oder den Boden 21 eine Neigung vorzusehen. Die Umfangswand 20 ist dabei vorteilhaft gegenüber der Axialrichtung 14 in einem Bereich von einschließlich +10° bis einschließlich -30° geneigt. Der Boden 21 ist zweckmäßig gegenüber der Radialrichtung 15 in einem Bereich von einschließlich +30° bis einschließlich -40° geneigt.

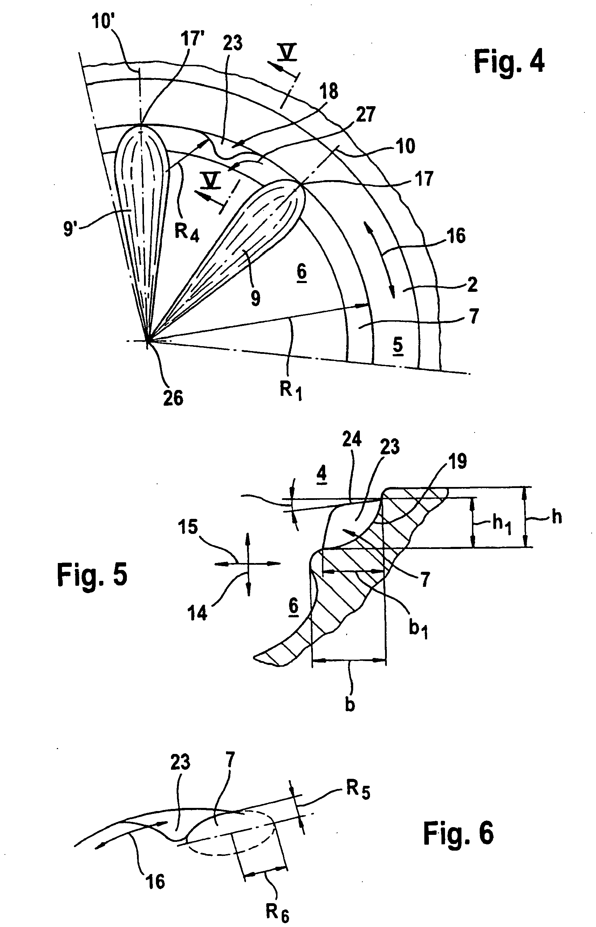

Fig. 4 zeigt ausschnittsweise eine Draufsicht des Kolbens 2 nach Fig. 1. In dieser Draufsicht ist zu erkennen, dass die Kolbenmulde 6, der Stufenraum 7 und der Kolbenboden 5 etwa kreisförmig koaxial zur Zylinderachse 26 angeordnet sind. Bezogen auf die Zylinderachse 26 ist eine Umfangsrichtung durch einen Doppelpfeil 16 angegeben.

Von der Vielzahl der vorgesehenen Einspritzstrahlen 9 sind der besseren Übersichtlichkeit halber nur zwei benachbarte Einspritzstrahlen 9, 9' dargestellt, deren Strahlachsen 10, 10' in Auftreffpunkten 17, 17' auf den Stufenraum 7 auftreffen. In der Umfangsrichtung 16 sind mittig zwischen den Auftreffpunkten 17, 17' Umlenkmittel 18 im Stufenraum 7 angeordnet, deren Funktion weiter unten im Zusammenhang mit den Fig. 8 bis 10 näher beschrieben wird. Die Umlenkmittel 18 sind im gezeigten Ausführungsbeispiel als in der Radialrichtung 15 nach innen von der Wand des Stufenraums 7 aus in Richtung der Kolbenmulde 6 hervorstehende Ablenknasen 23 ausgebildet. Der besseren Übersichtlichkeit halber ist hier nur eine Ablenknase 23 dargestellt. Im Zwischenraum zwischen jedem Auftreffpunkt 17, 17' sämtlicher Einspritzstrahlen 9, 9' ist je eine Ablenknase 23 mittig angeordnet, demnach beidseitig eines jeden Auftreffpunktes 17, 17' je eine Ablenknase 23 liegt. Die Anzahl der Ablenknasen 23 entspricht damit der Anzahl der Einspritzstrahlen 9, 9'.

Bezogen auf die Ebene der Umfangsrichtung 16 und der Radialrichtung 15 geht die Wand des Stufenraums 7 kreisbogenförmig konkav in die Ablenknase 23 über. Der kreisbogenförmige Übergang ist in der durch die Radialrichtung 15 und die Umfangsrichtung 16 aufgespannten Ebene mit einem Radius R₄ versehen. Der Radius R₄ des kreisbogenförmigen Übergangs liegt in einem Bereich von einschließlich 5% bis einschließlich 50% des Radius R₁ der Kolbenmulde 6.

Fig. 5 zeigt eine Querschnittsdarstellung der Anordnung nach Fig. 4 entlang der dort mit Pfeilen V-V angegebenen Schnittführung. Demnach steht die Ablenknase 23 in der Radialrichtung 15 nach innen und in der Axialrichtung 14 nach oben über der Wand 19 des Stufenraums 7 hervor und ragt in Richtung der Kolbenmulde 6 bzw. in Richtung des Brennraums 4.

Eine in der Axialrichtung 14 gemessene Höhe h des Stufenraumes 7 liegt in einem Bereich von einschließlich 10% bis einschließlich 30% des Radius R₁ der Kolbenmulde 6 (Fig. 4). Eine in der Radialrichtung 15 gemessene Breite b des Stufenraumes 7 liegt in einem Bereich von einschließlich 2% bis einschließlich 30% des Radius R₁ der Kolbenmulde 6 (Fig. 4).

Eine in der Axialrichtung 14 gemessene Höhe h₁ der Ablenknase 23 liegt in einem Bereich von einschließlich 60% bis einschließlich 100% der Höhe h des Stufenraumes 7. Eine in der Radialrichtung 15 gemessene Breite b₁ der Ablenknase 23 liegt in einem Bereich von einschließlich 60% bis einschließlich 100% der Breite b des Stufenraumes 7. Bezogen auf die Axialrichtung 14 ist die Ablenknase 23 in Richtung des Brennraums 4 durch eine im wesentlichen ebene axiale Stirnfläche 24 begrenzt. Die Stirnfläche 24 der Ablenknase 23 ist um einen Winkel β gegenüber der Radialrichtung 15 nach innen in die Kolbenmulde 6 hinein bzw. vom Brennraum 4 fortweisend geneigt. Der Winkel β der Stirnfläche 24 liegt dabei bevorzugt in einem Bereich von einschließlich 0° bis einschließlich 40° gegenüber der Radialrichtung 15.

Fig. 6 zeigt noch eine Variante der Ablenknase 23 nach Fig. 4. Demnach geht der Stufenraum 7 in der Umfangsrichtung 16 elliptisch konkav in die Ablenknase 23 über. Der elliptische Übergang weist eine kleine Halbachse R₅ und eine große Halbachse R₆ auf, wobei die kleine Halbachse R₅ in einem Bereich von einschließlich 2% bis einschließlich 25% und die große Halbachse R₆ in einem Bereich von einschließlich 10% bis einschließlich 60% des Radius R₁ der Kolbenmulde 6 (Fig. 4) liegt. In den übrigen Merkmalen und Bezugszeichen stimmt die Anordnung nach Fig. 6 mit der nach Fig. 4 überein.

Die Fig. 7 bis 9 zeigen ausschnittsweise den Zylinder 1 mit dem darin geführten Kolben 2 in verschiedenen zeitlichen Phasen des erfindungsgemäßen Betriebsverfahrens. Es ist jeweils in der Umfangsrichtung 16 ein Drittel vom Zylinder 1 mit dem Kolben 2 gezeigt. Der Injektor 8 (Fig. 1) weist über seinen Umfang gleichmäßig verteilt sieben bis zwölf, bevorzugt acht bis zehn Einspritzlöcher 25 auf. Im gezeigten Ausführungsbeispiel sind neun Einspritzlöcher 25 (Fig. 1) vorgesehen, demnach in dem in den Fig. 7 bis 8 gezeigten Drittel drei Einspritzstrahlen 9, 9' von eingespritztem Dieselkraftstoff ausgebildet sind.

Fig. 7 zeigt den Zustand der Kraftstoffeinspritzung bzw. der Ausbildung der Einspritzstrahlen 9, 9' etwa 20° Kurbelwinkel nach Spritzbeginn. Demnach sind die Einspritzstrahlen 9, 9' zu diesem Zeitpunkt bereits auf den Stufenraum 7 aufgetroffen und in drei Teilmengen 11, 12, 13 aufgeteilt. Die erste Teilmenge 11 von Kraftstoff ist entgegen der Radialrichtung 15 zurück zur Zylinderachse 16 und dabei nach unten in die Kolbenmulde 6 hinein umgelenkt. Ihre Ausbreitung erfolgt dabei unterhalb (bezogen auf die Ansicht nach den Fig. 7 bis 9) der Einspritzstrahlen 9, 9' entgegen deren Einspritzrichtung in der Radialrichtung 15. Die zweite Teilmenge 12 von Kraftstoff ist in der Radialrichtung 15 aus dem Stufenraum 7 heraus über den Kolbenboden 5 verlaufend radial nach außen umgelenkt.

Darüber hinaus bewirkt das Auftreffen der Einspritzstrahlen 9, 9' auf den Stufenraum 7, dass eine dritte Teilmenge 13 vom Kraftstoff der jeweiligen Einspritzstrahlen 9, 9' gebildet wird. Diese dritten Teilmengen 13, 13' werden aus der Radialrichtung 15 der Einspritzstrahlen 9, 9' beim Auftreffen auf den Stufenraum 7 beidseitig in die Umfangsrichtung 16 umgelenkt, so dass die jeweils dritten Teilmengen 13, 13' benachbarter Einspritzstrahlen 9, 9' aufeinander zulaufen. In ihrem Treffpunkt sind die Umlenkmittel 18 bzw. die Ablenknasen 23 (Fig. 4 bis 6) angeordnet, die in den Fig. 7 bis 10 der besseren Übersichtlichkeit halber nicht dargestellt sind. Im übrigen kann es auch zweckmäßig sein, auf die Umlenkmittel 18 bzw. die Ablenknasen 23 (Fig. 4 bis 6) zu verzichten.

Fig. 8 zeigt als nachfolgendes Phasenbild die Anordnung nach Fig. 7 etwa 25° Kurbelwinkel nach dem Spritzbeginn. Die Ausbildung und Umlenkung der dritten Teilmenge 13, 13' in die Umfangsrichtung 16 hat dazu geführt, dass die jeweils dritten Teilmengen 13, 13' benachbarter Einspritzstrahlen 9, 9' in der Umfangsrichtung 16 aufeinandergetroffen sind. Sofern Umlenkmittel 18 bzw. Ablenknasen 23 (Fig. 4 bis 6) vorgesehen sind, findet an deren Ort das Zusammentreffen der benachbarten Teilmengen 13, 13' statt. Die Einspritzung des flüssigen Kraftstoffes zur Ausbildung der Einspritzstrahlen 9, 9' erfolgt mit einem Druck > 1700 bar, bevorzugt > 2000 bar und wird im gezeigten Ausführungsbeispiel insbesondere mit etwa 2150 bar durchgeführt. In Verbindung mit der geometrischen Auslegung der Einspritzlöcher 25 (Fig. 1) und die gegenseitige Abstimmung vom Kegelwinkel α (Fig. 1), Einspritzbeginn, Einspritzdauer und geometrischer Auslegung der Kolbenmulde 6 und des Stufenraums 7 treffen die jeweils dritten Teilmengen 13, 13' der benachbarten Einspritzstrahlen 9, 9' in der Umfangsrichtung 16 mit einer Geschwindigkeit von mindestens 15 m/s, hier bevorzugt von etwa 30 m/s aufeinander.

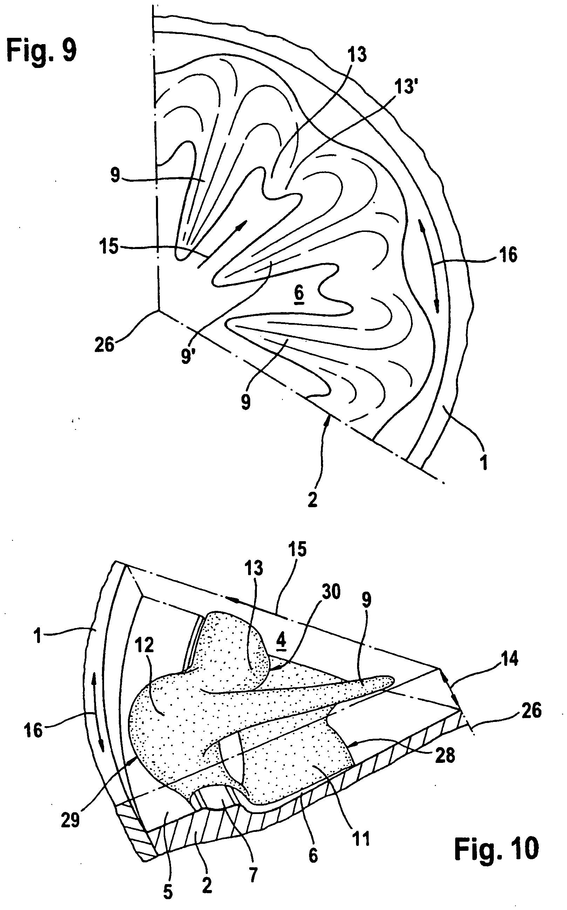

Im weiteren Phasenbild nach Fig. 9 ist die Ausbreitung des eingespritzten Kraftstoffes bei etwa 34° Kurbelwinkel nach Spritzbeginn dargestellt. Die aufeinandergetroffenen Teilmengen 13, 13' benachbarter Einspritzstrahlen 9 9' sind gegenüber dem Phasenbild nach Fig. 8 aus ihrer Bewegungsrichtung in der Umfangsrichtung 16 heraus entgegen der Radialrichtung 15 nach innen zur Zylinderachse 26 hin umgelenkt. Diese Umlenkung wird durch den Stufenraum 7 (Fig. 1 bis 8), gegebenenfalls unterstützt durch die Umlenkmittel 18 bzw. Ablenknasen 23 (Fig. 4 bis 6) hervorgerufen.

Fig. 10 zeigt schließlich eine perspektivische Ausschnittsdarstellung des Zylinders 1 mit dem Kolben 2 im Bereich eines einzelnen Einspritzstrahles 9 im zeitlichen Zustand nach Fig. 9. Demnach ist der in der Radialrichtung 15 nach außen auf den Stufenraum 7 gerichtete Einspritzstrahl 9 nach dem Auftreffen auf den Stufenraum 7 in drei Teilmengen 11, 12, 13 aufgeteilt. Bezogen auf deren weiter oben näher beschriebene Ausbreitungsrichtung bilden sich an ihren jeweiligen Vorderseiten insgesamt drei verschiedene Verbrennungsfronten 28, 29, 30 aus. Insbesondere hat sich die entgegen der radialen Richtung 15 ausbreitende dritte Teilmenge 13 und die mit ihr einhergehende dritte Verbrennungsfront 30 zeitlich erst nach der ersten Teilmenge 11 und der zweiten Teilmenge 12 mit den zugehörigen Verbrennungsfronten 28, 29 ausgebildet. Die dritte Verbrennungsfront 30 liegt bezogen auf die Umfangsrichtung 16 zwischen benachbarten Einspritzstrahlen 9, 9' (Fig. 7 bis 9) und bezogen auf die Axialrichtung 14 oberhalb der Kolbenmulde 6 mit der ersten Teilmenge 11 und der ersten Verbrennungsfront 28. Dort steht noch genügend Restsauerstoff für die Verbrennung zur Verfügung. Als Folge davon sinkt die Rußemission. Durch die zeitverzögerte Entstehung der dritten Verbrennungsfront 30 wird auch die Ausbildung von lokalen Spitzentemperaturen im Brennraum 4 vermieden bzw. verringert. Dies trägt zur Verminderung der Stickoxid-Entstehung bei. Auch die Nachoxidation von Ruß wird begünstigt. Die zweite Teilmenge 12 wird durch die Ablenkung in die Axialrichtung 14 in ihrer Ausbreitung zur Zylinderwand (Radialrichtung 15) gegenüber herkömmlichen Verfahren deutlich abgebremst. Bei 34° Kurbelwinkel nach dem oberen Totpunkt (Fig. 9) haben die Kraftstoffteilchen noch keinen Wandkontakt und erreichen die Wand des Zylinders 1 erst bei etwa 36° Kurbelwinkel. Der Eintrag des Russanteiles ins Motoröl an der Wand des Zylinders 1 kann vermindert werden.

Der besseren Übersichtlichkeit halber sind in den Fig. 7 bis 10 auch solche gleichen Merkmale mit gleichen Bezugszeichen versehen, die vorstehend im Zusammenhang mit jeweils einer einzelnen Fig. nicht näher benannt sind.

## Patentansprüche

1. Verfahren zum Betrieb einer direkteinspritzenden, selbstzündenden Brennkraftmaschine, wobei die Brennkraftmaschine mindestens einen Zylinder (1), einen im Zylinder (1) auf und ab geführten Kolben (2), einen Zylinderkopf (3) und einen durch den Zylinder (1), den Kolben (2) und den Zylinderkopf (3) begrenzten Brennraum (4) umfaßt, wobei in einen Kolbenboden (5) des Kolbens (2) eine Kolbenmulde (6) eingeformt ist, die im Übergangsbereich zum Kolbenboden (5) in einen im wesentlichen ringförmigen Stufenraum (7) übergeht, und wobei ein Injektor (8) für Kraftstoff in den Brennraum (4) mündet, mittels dessen über seinen Umfang verteilt mehrere Einspritzstrahlen (9, 9') von Kraftstoff entlang kegelförmig angeordneter Strahlachsen (10) in den Brennraum (4) eingespritzt werden,
**dadurch gekennzeichnet, dass**
die Einspritzstrahlen (9, 9') derart zum Stufenraum (7) hin geführt und dort umgelenkt werden, dass eine erste Teilmenge (11) von Kraftstoff in einer Axialrichtung (14) und einer Radialrichtung (15) in die Kolbenmulde (6) umgelenkt wird, dass eine zweite Teilmenge (12) von Kraftstoff in der Axialrichtung (14) und der Radialrichtung (15) über den Kolbenboden (5) in den Brennraum (4) umgelenkt wird, und dass eine dritte Teilmenge (13) von Kraftstoff in eine Umfangsrichtung (16) umgelenkt wird, wobei die jeweils dritten Teilmengen (13, 13') benachbarter Einspritzstrahlen (9, 9') in der Umfangsrichtung (16) aufeinandertreffen und anschließend in der Radialrichtung (15) nach innen umgelenkt werden, indem der Stufenraum (7) winklig ausgeführt wird, wobei eine Wand (19) des Stufenraumes (7) durch eine in einer Axialrichtung (14) gerade, zylindrische Umfangswand (20), durch einen in einer Radialrichtung (15) geraden, ebenen Boden (21) sowie durch eine konkav gekrümmte Übergangswand (22) gebildet wird und der Boden (21) mittels der Übergangswand (22) in die Umfangswand (20) übergeht und ein Kegelwinkel (α) der kegelförmig angeordneten Strahlachsen (10), Einspritzbeginn und Einspritzdauer derart aufeinander abgestimmt sind, dass mindestens 30%, insbesondere einschließlich 30% bis einschließlich 80% der eingespritzten Kraftstoffmenge in einem Auftreffpunkt (17) auf den Stufenraum (7) treffen und der Kraftstoff mit einem Druck von > 2000 bar und aus zehn, elf oder zwölf Einspritzlöchern (25) des Injektors (8) eingespritzt wird.

2. Verfahren nach Anspruch 1,
**dadurch gekennzeichnet, dass**
beidseitig eines Auftreffpunktes (17) der Strahlachse (10) auf den Stufenraum (7) Umlenkmittel (18) im Stufenraum (7) vorgesehen sind, wobei die Umlenkmittel (7) die dritte Teilmenge (13) von Kraftstoff von der Umfangsrichtung (16) in die Radialrichtung (15) nach innen umlenken.

3. Verfahren nach Anspruch 1 oder 2,
**dadurch gekennzeichnet, dass**
die jeweils dritten Teilmengen (13, 13') benachbarter Einspritzstrahlen (9, 9') in der Umfangsrichtung (16) mit einer Geschwindigkeit von mindestens 15 m/s, insbesondere von etwa 30m/s aufeinandertreffen.

4. Brennkraftmaschine, vorgesehen für den Betrieb nach dem Verfahren nach einem der Ansprüche 1 bis 3, wobei die Brennkraftmaschine eine direkteinspritzende, selbstzündenden Brennkraftmaschine mit mindestens einem Zylinder (1), einem im Zylinder (1) auf und ab geführten Kolben (2), einem Zylinderkopf (3) und einem durch den Zylinder (1), den Kolben (2) und den Zylinderkopf (3) begrenzten Brennraum (4) ist, wobei in einen Kolbenboden (5) des Kolbens (2) eine Kolbenmulde (6) eingeformt ist, die im Übergangsbereich zum Kolbenboden (5) in einen im wesentlichen ringförmigen Stufenraum (7) übergeht, und wobei ein Injektor (8) für Kraftstoff in den Brennraum (4) mündet, der zur Einspritzung von mehreren über seinen Umfang verteilten Einspritzstrahlen (9, 9') von Kraftstoff entlang kegelförmig angeordneter Strahlachsen (10) in den Brennraum (4) vorgesehen ist, und dessen Strahlachsen (10) zumindest in einem Teil des Zeitraums der Einspritzung auf den Stufenraum (7) gerichtet sind und ein Kegelwinkel (α) der kegelförmig angeordneten Strahlachsen (10), Einspritzbeginn und Einspritzdauer derart aufeinander abgestimmt sind, dass mindestens 30%, insbesondere einschließlich 30% bis einschließlich 80% der eingespritzten Kraftstoffmenge in einem Auftreffpunkt (17) auf den Stufenraum (7) treffen und eine Wand (19) des Stufenraumes (7) im Querschnitt durch eine gerade Umfangswand (20), einen geraden Boden (21) und eine konkav gekrümmte Übergangswand (22) gebildet ist, wobei die Umfangswand (20) gegenüber einer Axialrichtung (14) in einem Bereich von einschließlich +10° bis einschließlich -30° geneigt ist, und/oder wobei der Boden (21) gegenüber einer Radialrichtung (15) in einem Bereich von einschließlich +30° bis einschließlich -40° geneigt ist, und/oder wobei die konkav gekrümmte Übergangswand (22) einen Radius (R₃) in einem Bereich von einschließlich 1,5% bis einschließlich 20% des Radius (R₁) der Kolbenmulde (6) aufweist und eine Höhe (h) des Stufenraumes (7) in der Axialrichtung (14) in einem Bereich von einschließlich 10% bis einschließlich 30% des Radius (R₁) der Kolbenmulde (6) liegt, und dass eine Breite (b) des Stufenraumes (7) in der Radialrichtung (15) in einem Bereich von einschließlich 2% bis einschließlich 30% des Radius (R₁) der Kolbenmulde (6) liegt und die Einspritzung des Kraftstoffs mit einem Druck von > 2000 bar erfolgt und der Injektor (8) über seinen Umfang insbesondere gleichmäßig verteilt zehn, elf oder zwölf Einspritzlöcher (25) aufweist.

5. Brennkraftmaschine nach Anspruch 4,
**dadurch gekennzeichnet, dass**
beidseitig eines Auftreffpunktes (17) der Strahlachse (10) auf den Stufenraum (7) Umlenkmittel (18) im Stufenraum (7) angeordnet sind, die zur Umlenkung einer dritten Teilmenge (13) von Kraftstoff von einer Umfangsrichtung (16) in die Radialrichtung (15) nach innen vorgesehen sind.

6. Brennkraftmaschine nach Anspruch 5,
**dadurch gekennzeichnet, dass**
die Umlenkmittel (18) als in der Radialrichtung (15) und der Axialrichtung (14) nach innen von der Wand (19) des Stufenraumes (7) aus und in Richtung der Kolbenmulde (6) bzw. des Brennraumes (4) hervorstehende Ablenknasen (23) ausgebildet sind.

7. Brennkraftmaschine nach Anspruch 6,
**dadurch gekennzeichnet, dass**
der Stufenraum (7) in der Umfangsrichtung (16) und der Radialrichtung (15) kreisbogenförmig konkav in die Ablenknase (23) übergeht.

8. Brennkraftmaschine nach Anspruch 7,
**dadurch gekennzeichnet, dass**
der kreisbogenförmige Übergang einen Radius (R₄) aufweist, der in einem Bereich von einschließlich 5% bis einschließlich 50% des Radius (R₁) der Kolbenmulde (6) liegt.

9. Brennkraftmaschine nach Anspruch 8,
**dadurch gekennzeichnet, dass**
der Stufenraum (7) in der Umfangsrichtung (16) und der Radialrichtung (15) elliptisch konkav in die Ablenknase (23) übergeht.

10. Brennkraftmaschine nach Anspruch 9,
**dadurch gekennzeichnet, dass**
der elliptische Übergang eine kleine Halbachse (R₅) und eine große Halbachse (R₆) aufweist, wobei die kleine Halbachse (R₅) in einem Bereich von einschließlich 2% bis einschließlich 25% und die große Halbachse (R₆) in einem Bereich von einschließlich 10% bis einschließlich 60% des Radius (R₁) der Kolbenmulde (6) liegt.

11. Brennkraftmaschine nach einem der Ansprüche 6 bis 10,
**dadurch gekennzeichnet, dass**
eine Höhe (h₁) der Ablenknase (23) in der Axialrichtung (14) in einem Bereich von einschließlich 60% bis einschließlich 100% der Höhe (h) des Stufenraumes (7) liegt, dass eine Breite (b₁) der Ablenknase (23) in der Radialrichtung (15) in einem Bereich von einschließlich 60% bis einschließlich 100% der Breite (b) des Stufenraumes (7) liegt, und dass eine axiale Stirnfläche (24) der Ablenknase (23) um einen Winkel (β) in einem Bereich von einschließlich 0° bis einschließlich 40° gegenüber der Radialrichtung (15) nach innen in die Kolbenmulde (6) hinein geneigt ist.

12. Brennkraftmaschine nach einem der Ansprüche 4 bis 11,
**dadurch gekennzeichnet, dass**
das Einspritzloch (25) des Injektors (8) eine Länge (L) und einen Durchmesser (D) aufweist, wobei das Verhältnis der Länge (L) zum Durchmesser (D) in einem Bereich von einschließlich 3,0 bis einschließlich 11,0 liegt.

13. Brennkraftmaschine nach einem der Ansprüche 4 bis 12,
**dadurch gekennzeichnet, dass**
alle Strahlachsen (10) der Einspritzstrahlen (9) auf einem einzigen gemeinsamen Kegelmantel angeordnet sind.

## Claims

1. Method for operating an internal combustion engine with compression ignition and direct injection, wherein the internal combustion engine comprises at least one cylinder (1), a piston (2) guided up and down in the cylinder (1), a cylinder head (3) and a combustion chamber (4) bounded by the cylinder (1), the piston (2) and the cylinder head (3), wherein a piston recess (6) merging into a substantially annular stepped chamber (7) in the transitional region towards the piston crown (5) is formed in a piston crown (5) of the piston (2), and wherein an injector (8) for fuel, by means of which several injection jets (9, 9') of fuel distributed along its circumference are injected into the combustion chamber (4) along conically arranged jet axes (10), terminates into the combustion chamber (4),
**characterised in that**
the injection jets (9, 9') are guided to the stepped chamber (7) and there diverted in such a way that a first partial quantity (11) of fuel is diverted into the piston recess (6) in an axial direction (14) and a radial direction (15), that a second partial quantity (12) of fuel is diverted via the piston crown (5) into the combustion chamber (4) in the axial direction (14) and the radial direction (15), and that a third partial quantity (13) of fuel is diverted into a circumferential direction (16), wherein the third partial quantities (13, 13') of adjacent injection jets (9, 9') meet each other in the circumferential direction (16) and are then diverted inwards in the radial direction (15) as a result of the fact that the stepped chamber (7) is designed angular, wherein a wall (19) of the stepped chamber (7) is represented by a cylindrical circumferential wall (20) which is straight in an axial direction (14), by a flat base (21) which is straight in a radial direction (15) and by a concave transitional wall (22), and wherein the base (21) merges into the circumferential wall (20) by means of the transitional wall (22), and wherein a cone angle (α) of the conically arranged jet axes (10), the beginning of injection and the injection period are matched to one another in such a way that at least 30%, in particular 30% to 80% inclusive, of the injected fuel quantity impinges on the stepped chamber (7) in an incident point (17) and the fuel is injected at a pressure of > 2000 bar out of ten, eleven or twelve injection holes (25) of the injector (8).

2. Method according to claim 1,
**characterised in that**
deflecting means (18) are provided in the stepped chamber (7) on both sides of an incident point (17) of the jet axis (10) on the stepped chamber (7), the deflecting means (18) deflecting the third partial quantity (13) of fuel from the circumferential direction (16) inwards into the radial direction (15).

3. Method according to claim 1 or 2,
**characterised in that**
the third partial quantities (13, 13') of adjacent injection jets (9, 9') meet each other in the circumferential direction (16) with a speed of at least 15 m/s, in particular of approximately 30 m/s.

4. Internal combustion engine designed for operation using the method according to any of claims 1 to 3, wherein the internal combustion engine is an engine with compression ignition and direct injection and comprises at least one cylinder (1), a piston (2) guided up and down in the cylinder (1), a cylinder head (3) and a combustion chamber (4) bounded by the cylinder (1), the piston (2) and the cylinder head (3), wherein a piston recess (6) merging into a substantially annular stepped chamber (7) in the transitional region towards the piston crown (5) is formed in a piston crown (5) of the piston (2), and wherein an injector (8) for fuel, which is provided for the injection of several injection jets (9, 9') of fuel distributed along its circumference into the combustion chamber (4) along conically arranged jet axes (10) and the jet axes (10) of which are directed onto the step chamber (7) for at least a part of the injection period, terminates into the combustion chamber (4), and wherein a cone angle (α) of the conically arranged jet axes (10), the beginning of injection and the injection period are matched to one another in such a way that at least 30%, in particular 30% to 80% inclusive, of the injected fuel quantity impinges on the stepped chamber (7) in an incident point (17), and wherein a wall (19) of the stepped chamber (7) is represented in cross-section by a straight circumferential wall (20), by a straight base (21) and by a concave transitional wall (22), wherein the circumferential wall (20) is inclined relative to an axial direction (14) within a range of +10° to -30° inclusive, and/or the base (21) is inclined relative to a radial direction (15) within a range of +30° to -40° inclusive, and/or the concave transitional wall (22) has a radius (R₃) within a range of 1.5% to 20% inclusive of the radius (R₁) of the piston recess (6), and a height (h) of the stepped chamber (7) in the axial direction (14) is within a range of 10% to 30% inclusive of the radius (R₁) of the piston recess (6), and a width (b) of the stepped chamber (7) in the radial direction (15) is within a range of 2% to 30% inclusive of the radius (R₁) of the piston recess (6), and wherein the fuel is injected at a pressure of > 2000 bar and the injector (8) has ten, eleven or twelve injection holes (25) which are in particular distributed evenly along its circumference.

5. Internal combustion engine according to claim 4,
**characterised in that**
deflecting means (18) are provided in the stepped chamber (7) on both sides of an incident point (17) of the jet axis (10) on the stepped chamber (7), the deflecting means (18) being provided for deflecting a third partial quantity (13) of fuel from a circumferential direction (16) inwards into the radial direction (15).

6. Internal combustion engine according to claim 5,
**characterised in that**
the deflecting means (18) are designed as deflectors (23) projecting in the radial direction (15) and in the axial direction (14) inwards from the wall (19) of the stepped chamber (7) towards the piston recess (6) or the combustion chamber (4) respectively.

7. Internal combustion engine according to claim 6,
**characterised in that**
the stepped chamber (7) merges into the deflector (23) in an arc-shaped, concave arrangement in the circumferential direction (16) and the radial direction (15).

8. Internal combustion engine according to claim 7,
**characterised in that**
the arc-shaped transition has a radius (R₄) within a range of 5% to 50% inclusive of the radius (R₁) of the piston recess (6).

9. Internal combustion engine according to claim 8,
**characterised in that**
the stepped chamber (7) merges into the deflector (23) in an elliptically concave arrangement in the circumferential direction (16) and the radial direction (15).

10. Internal combustion engine according to claim 9,
**characterised in that**
the elliptical transition has a small semiaxis (R₅) and a large semiaxis (R₆), wherein the small semiaxis (R₅) is within a range of 2% to 25% inclusive and the large semiaxis (R₆) is within a range of 10% to 60% inclusive of the radius (R₁) of the piston recess (6).

11. Internal combustion engine according to any of claims 6 to 10,
**characterised in that**
a height (h₁) of the deflector (23) in the axial direction (14) is within a range of 60% to 100% inclusive of the height (h) of the stepped chamber (7), **in that** a width (b₁) of the deflector (23) in the radial direction (15) is within a range of 60% to 100% inclusive of the width (b) of the stepped chamber (7), and **in that** an axial end face (24) of the deflector (23) is inclined inwards into the piston recess (6) by an angle (β) within a range of 0° to 40° inclusive relative to the radial direction (15).

12. Internal combustion engine according to any of claims 4 to 11,
**characterised in that**
the injection hole (25) of the injector (8) has a length (L) and a diameter (D), the ratio of the length (L) to the diameter (D) being within a range of 3.0 to 11.0 inclusive.

13. Internal combustion engine according to any of claims 4 to 12,
**characterised in that**
all jet axes (10) of the injection jets (9) are arranged on a single common conical surface.

## Revendications

1. Procédé pour faire fonctionner un moteur à combustion interne à allumage automatique et à injection directe, le moteur à combustion interne comprenant au moins un cylindre (1), un piston allant et venant dans le cylindre, une tête (3) de cylindre et une chambre de combustion (4) délimitée par le cylindre (1), le piston (2) et la tête (3) de piston, une cuvette de piston (6) étant moulée dans une calotte (5) du piston (2), ladite cuvette dépasse dans la zone de transition vers la calotte de piston (5) dans un espace étagé (7) de forme sensiblement circulaire, et un injecteur (8) de carburant débouchant dans la chambre de combustion (4), lequel permet d'effectuer plusieurs jets d'injection (9, 9') de carburant répartis sur la circonférence le long des axes d'injection (10) qui sont disposés de manière conique dans la chambre de combustion (4), **caractérisé en ce que** les jets d'injection (9, 9') sont ainsi amenés vers l'espace étagé (7) et y sont déviés, **en ce qu'**une première quantité partielle (11) de carburant est déviée dans une direction axiale (14) et dans une direction radiale (15) dans la cuvette de piston (6), **en ce qu'**une deuxième quantité partielle (12) de carburant est déviée dans la direction axiale (14) et dans la direction radiale (15) au-delà de la cuvette de piston (5) dans la chambre de combustion, et **en ce qu'**une troisième quantité partielle (13) de carburant est déviée dans une direction circonférentielle (16), les troisièmes quantités partielles (13, 13') respectivement des jets d'injections adjacents (9, 9') se percutent dans la direction circonférentielle (16) et sont alors déviées vers l'intérieur dans la direction radiale (15) du fait que l'espace étagé (7) est de conception angulaire, une paroi (19) de l'espace étagé (7) étant formée par une paroi circonférentielle (20) cylindrique, droite dans une direction axiale (14), par un fond (21) plat, droit dans une direction radiale (15) ainsi que par une paroi de transition (22) à courbure concave et le fond (21) dépassant dans la paroi circonférentielle (22) au moyen de la paroi de transition (22) et un angle de cône (a) des axes d'injection (10) disposées de manière conique, le début de l'injection et la durée de l'injection étant déterminés les uns par rapport aux autres de telle sorte qu'au moins 30 %, notamment entre 30 % inclus et 80 % inclus de la quantité de carburant injectée se percutent à un point de rencontre (17) sur l'espace étagé (7) et le carburant à une pression > 2000 bar étant injecté par dix, onze ou douze orifices d'injection (25) de l'injecteur (8).

2. Procédé selon la revendication 1, **caractérisé en ce que** de chaque côté d'un point de rencontre (17) de l'axe d'injection (10) sur l'espace étagé (7) sont prévus des moyens de déviation (18) dans l'espace étagé (7), lesdits moyens de déviation (7) déviant la troisième quantité partielle (13) de carburant depuis la direction circonférentielle (16) dans la direction radiale (15) vers l'intérieur.

3. Procédé selon la revendication 1 ou 2, **caractérisé en ce que** les troisièmes quantités partielles (13, 13') respectives des jets d'injections (9, 9') adjacents se percutent dans la direction circonférentielle (16) à une vitesse d'au moins 15 m/s, notamment à approximativement de 30 m/s.

4. Moteur à combustion interne prévu pour le fonctionnement d'après le procédé selon l'une quelconque des revendications 1 à 3, le moteur à combustion interne étant un moteur à combustion interne à allumage automatique et à injection directe comprenant au moins un cylindre (1), un piston (2) allant et venant dans le cylindre (1), une tête (3) de cylindre et une chambre de combustion (4) délimitée par le cylindre (1), le piston (2) et la tête (3) de cylindre, une cuvette de piston (6) étant moulée dans une calotte (5) du piston (2), ladite cuvette dépasse dans la zone de transition vers la calotte de piston (5) dans un espace étagé (7) de forme sensiblement circulaire, et un injecteur (8) de carburant débouchant dans la chambre de combustion (4), lequel est prévu pour l'injection de plusieurs jets d'injection (9, 9') de carburant répartis sur sa périphérie, le long des axes d'injection (10) disposés de façon conique dans la chambre de combustion (4), et lesdits axes d'injection (10) étant dirigés sur l'espace étagé (7) au moins pendant une partie de la durée de l'injection et un angle (α) au sommet du cône des axes d'injection (10) disposé de façon conique, un début d'injection et une durée d'injection sont déterminés l'uns par rapport aux autres de telle sorte qu'au moins 30 %, notamment de 30 % inclus à 80 % inclus de la quantité de carburant injectée se percutent à un point de rencontre (17) sur l'espace étagé (7) et une paroi (19) de l'espace étagé (7) est formée en section transversale par une paroi circonférentielle (20) droite, un fond (21) droit et une paroi de transition (22) à courbure concave, la paroi circonférentielle (20) étant inclinée dans une plage comprise entre +10° inclus et -30° inclus par rapport à une direction axiale (14), et / ou le fond (21) étant incliné dans une plage comprise +30° inclus et -40° inclus par rapport à une direction radiale (15), et / ou la paroi de transition (22) à courbure concave présentant un rayon (R₃) situé dans une plage comprise entre 1,5 % inclus et 20 % inclus du rayon (R₁) de la cavité du piston (6) et une hauteur (h) de l'espace étagé (7) dans la direction axiale (14) se situe dans une plage comprise entre 10% inclus et 30 % inclus du rayon (R₁) de la cavité du piston (6), et en ce qu'une hauteur (b) de l'espace étagé (7) dans la direction radiale (15) se situe dans une plage comprise entre 2 % inclus et 30 % inclus du rayon (R₁) de la cavité du piston (6) et l'injection du carburant s'effectue à une pression > 2 000 bar et l'injecteur (8) présente dix, onze ou douze orifice d'injection (25) répartis notamment régulièrement sur sa circonférence.

5. Moteur à combustion interne selon la revendication 4, **caractérisé en ce que** de chaque côté d'un point de rencontre (17) de l'axe d'injection (10) sur l'espace étagé (7) sont disposés des moyens de déviation (18) dans l'espace étagé (7), qui sont prévus pour dévier une troisième quantité partielle (13) de carburant d'une direction circonférentielle (16) dans la direction radiale (15) vers l'intérieur.

6. Moteur à combustion interne selon la revendication 5 **caractérisé en ce que** les moyens de déviation (18) sont conçus en tant que bec de déviation (23) dépassant dans la direction radiale (15) et dans la direction axiale (14) vers l'intérieur de la paroi (19) de l'espace étagé (7) et dans la direction de la cavité (6) de piston ou de la chambre à combustion (4).

7. Moteur à combustion interne selon la revendication 6, **caractérisé en ce que** l'espace étagé (7) dépasse dans la direction circonférentielle (16) et dans la direction radiale (15) dans le bec de déviation en arc de cercle concave.

8. Moteur à combustion interne selon la revendication 7, **caractérisé en ce que** le transition en arc de cercle concave présente un rayon (R₄) qui se situe dans une plage comprise entre 5 % inclus et 50 % inclus du rayon (R₁) de la cavité (6) du piston.

9. Moteur à combustion interne selon la revendication 8, **caractérisé en ce que** l'espace étagé (7) dépasse de manière concave elliptique dans le nez de déviation dans la direction circonférentielle (16) et dans la direction radiale.

10. Moteur à combustion interne selon la revendication 9, **caractérisé en ce que** le transition elliptique présente un petit demi-axe (R₅) dans une plage comprise entre 2 % inclus et 25 % inclus et un grand demi-axe (R₆) dans une plage comprise entre 10 % inclus et 60 % inclus du rayon (R₁) de la cavité du piston (6).

11. Moteur à combustion interne selon l'une quelconque des revendications 6 à 10, **caractérisé en ce qu'**une hauteur (h) du bec de déviation (23) se situe dans la direction axiale (14) dans une plage comprise entre 60 % inclus et 100 % inclus de la hauteur (h) de l'espace étagé (7), **en ce qu'**une largeur (b₁) du bec de déviation (23) en direction radiale (15) se situe dans une plage comprise entre 60 % inclus et 100 % inclus de la largeur (b) de l'espace étagé (7) et **en ce qu'**une face frontale axiale (24) du bec de déviation (23) est incliné à un angle (ß) dans une plage comprise entre 0 ° inclus et 40 ° inclus par rapport à la direction radiale (15) vers l'intérieur dans la cavité du piston (6).

12. Moteur à combustion interne selon l'une quelconque des revendications précédentes 4 à 11, **caractérisé en ce que** l'orifice d'injection (25) de l'injecteur (8) présente une longueur (L) et un diamètre (D), le rapport entre la longueur (L) et le diamètre (D) se situant dans une plage comprise entre 3,0 inclus et 11,0 inclus.

13. Moteur à combustion interne selon l'une quelconque des revendications 4 à 12, tous les axes d'injection (10) des jets d'injection (9) sont disposés sur une seule enveloppe conique commune.
